# EUROPEAN PATENT SPECIFICATION

(11) **EP 2 289 227 B1**
(45) Date of publication and mention of the grant of the patent: **07.11.2018**
(21) Application number: 09766146.6
(22) Date of filing: 29.05.2009
(51) Int. Cl.: H04L 29/06, H04L 12/22

(54) **IMPROVEMENTS RELATED TO THE AUTHENTICATION OF MESSAGES**
VERBESSERUNGEN IN BEZUG AUF NACHRICHTENAUTHENTIFIZIERUNG
AMÉLIORATIONS PAR RAPPORT À L'AUTHENTIFICATION DE MESSAGES

(30) Priority: 18.06.2008 GB 0811210
(43) Date of publication of application: 02.03.2011
(73) Proprietor: Oxford University Innovation Limited, Botley Oxford OX2 0JB (GB)
(72) Inventor: ROSCOE, Andrew, William, Oxford OX1 3QD (GB); NGUYEN, Long, Haang, Oxford OX1 3QD (GB)
(74) Representative: Abel & Imray
(86) International application number: PCT/GB2009/050591
(87) International publication number: WO 2009/153585

(56) References cited:
- WO-A1-01/58081
- WO-A2-02/05477
- GB-A- 2 419 785
- US-A- 5 898 780

## Description

The present invention relates to an authenticatable piece of data, a method of providing an authenticatable piece of data, and a method of authenticating an authenticatable piece of data.

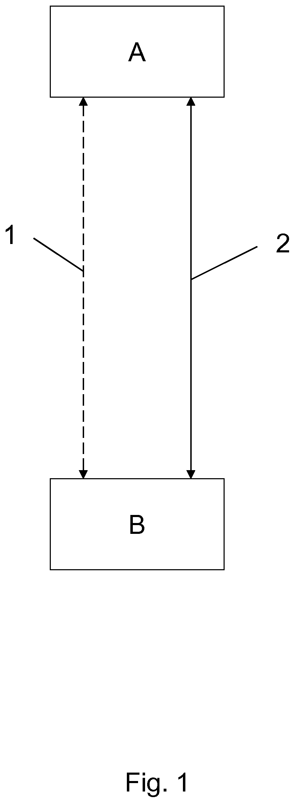

A known communication system is shown in Figure 1. The system comprises a party A and a party B, which are connected by an insecure communication channel 1 and an authenticated communication channel 2.

Messages sent between A and B over the insecure communication channel 1 can be overheard, deleted and modified by an intruder. An example of such a channel would be communication over the Internet using the standard unencrypted SMTP (e-mail) protocol.

Messages sent A and B over the authenticated communication channel 2 cannot be modified or forged by an intruder without it the receiving party being aware that the message has been tampered with. However, messages can be overheard, deleted, delayed or repeated by an intruder. B cannot assume that a message sent by A over the authenticated channel 2 is intended specifically for B, however it is straightforward for A to use such a channel to achieve this effect by including the names of the intended recipients in the messages it sends over the authenticated channel 2. An example of such a channel would be communication over Internet using messages signed using the Public Key Infrastructure (PKI).

It is noted that in context of the present invention the "name" of a party simply means any piece of information which that party can be identified, and may for example be an e-mail address, IP address, MAC (Media Access Control) address, account number, a temporarily assigned name or some other arbitrary token.

Under the PKI, a signing party has a private key, which is known only them, and a public key, which is available to everyone. The public key certified by a trusted certification authority to belong the signing party. The signing party can authenticate a message by "signing" it, which means encrypting it with their private key. The encrypted message can be decrypted by anyone, using the public key, to reveal the contents of the message. However, the public key will only decrypt messages encrypted using the private key, and the private key is known only to the signing party, and so the message can be authenticated as originating from the signing party.

One way for A to send messages to B that could be authenticated as coming from A, would be for A to use the authenticated channel 2 to send the messages. However, encrypting and decrypting messages using the private and public keys is extremely computationally expensive. A well-known method of sending authenticatable messages that is less computationally expensive is to use a hash function. (The method itself is described later below.)

A hash function can be used to produce a digital "fingerprint" or hash for a large piece of data such as a message. The hash is a much smaller piece of data, with the intention being that only the original piece of data could have been used to produce the hash. To this end, hash functions are generally required to have the two following properties:
1) Given a first piece of data, it is not feasible for an attacker to find a second piece of data with the same hash as the first piece of data (sometimes called "weak collision resistance");
2) It is not feasible for an attacker to two pieces of data with the same hash (sometimes called "strong collision resistance").

The hash of a message M is written hash(M).

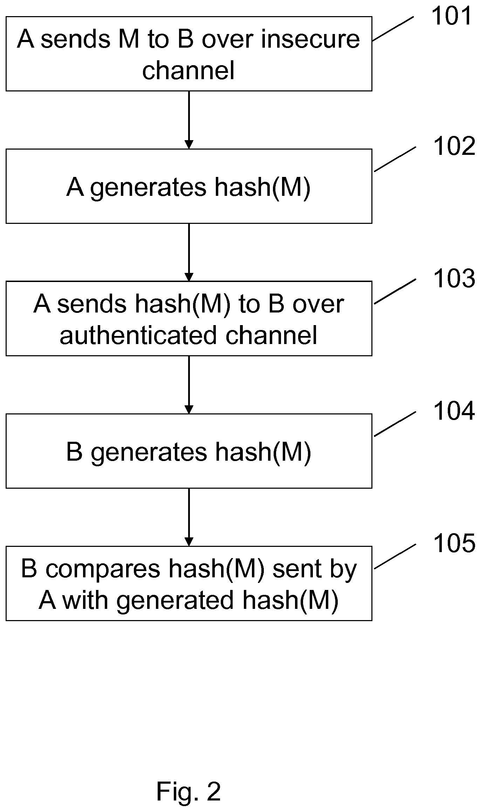

The method of sending authenticatable messages using the hash function is shown in Figure 2.

A first sends a message M to B over the insecure channel 1 (step 101). A then generates the hash of M (step 102), and sends it to B over the authentic channel 2 (step 103). B generates the hash of the message M it received over the insecure channel (step 104), and compares it with the hash it received from A (step 105). If the two hashes are the same then, as B knows the hash definitely came from A (as B received it over the authentic channel 2), and only M could have been used to produce the hash (as it is not feasible for an attacker to have found another message that produced the same hash), B knows M must have been sent by A.

However, although generating hashes is less computationally expensive than encrypting messages, due to the two properties hash functions are generally required to have it is still reasonably computationally expensive to do so. Also, again due to the two properties hash functions are generally required to have, the generated hash itself must be quite long (160, 256 or more bits, depending on the security and lifetime required).

It would be desirable to have a method of authenticating messages that was less computationally expensive, while not reducing the security of the authentication.

WO 01/58081 A1 (Nokia Mobile Phones Ltd) published 9 August 2001 discloses a method for checking the integrity of a message transmitted between a sender in a transmitting end and a recipient in a receiving end, in which method an authentication value is calculated for the first message and a random string is generated. In the transmitting end, an authentication value is generated from a message to be sent and the random string. A check code is formed from the authentication value and the random string. The first message is transferred from a sender to a recipient through a first channel, and the check code is transferred through a second secure channel. In the receiving end a message is received through a first channel and the check code is received through a second secure channel. In the receiving end an authentication check formed at least based of the received message. The integrity of the received message is checked by comparing the predetermined check values in the receiving end.

GB 2419785 A (Roke Manor Research) published 3 May 2006 discloses a system for ensuring that data has not been tampered with or adulterated involves using at least two transmission routes through a network and then comparing the data received over each path. If the data corresponds it is deemed to be reliable, otherwise it is suspect. At the most basic level two copies of the raw data can be sent over two different paths. Alternatively the data can be sent over one path, while a hash of the data is sent over a second. Thirdly an encrypted copy of the data could be sent over on path, and the key required to decrypt the data sent over the second path. Each of the above systems can be further enhanced by introducing more paths and more copies, for example four paths over which two copies of each data packet and two separate packets each containing half a hash are transmitted.

In accordance with a first aspect of the present invention, there is provided an authenticatable piece of data, comprising:
the piece of data;
a multiplicity of keys;
a multiplicity of digests, wherein each digest is a digest of the piece of data using a key from the multiplicity of keys;
wherein the multiplicity of keys and multiplicity of digests can be authenticated as originating from a particular party.

The data can be authenticated by a party selecting one or more keys from the multiplicity of keys, generating the digests of the data using those one or more keys, and comparing them to the corresponding digests from the multiplicity of digests. As the keys and digests can be authenticated as originating from a particular party, and it is not feasible for an attacker to find a second piece of data that generates the same digests using the one or more keys (as the attacker has no way of knowing which one or more keys will be selected, and in the case of multiple keys being selected there may not in fact be such a second piece of data), if the generated digests match the corresponding digests from the multiplicity of digests then the data must have originated from that particular party.

The multiplicity of keys and multiplicity of digests may consist of a single cryptographically signed piece of data. This allows the keys and digests to be authenticated as coming from the signing party.

In accordance with a second aspect of the present invention, there is provided a method of providing an authenticatable piece of data, comprising the steps of:
obtaining a piece of data;
obtaining a multiplicity of keys;
generating a digest of the piece of data using each key from the multiplicity of keys;
providing the piece of data;
providing the multiplicity of keys and multiplicity of digests by an authenticatable method.

This method provides the authenticatable piece of data of the preceding aspect of the invention. The multiplicity of keys and multiplicity of digests may be provided as a single cryptographically signed piece of data.

In accordance with a third aspect of the present invention, there is provided a method of authenticating an authenticatable piece of data as described above as produced using a method as described above, comprising the steps of:
selecting one or more keys from the multiplicity of keys;
generating a digest of the piece of data using each of the one or more selected keys;
comparing each generated digest with the corresponding digest provided with the authenticatable piece of data.

This method allows the data to be authenticated as described above.

In accordance with fourth and fifth aspects of the present invention there are provided a data carrier and a computer program product as defined in the appended claims.

There will now be described embodiments of the invention, with reference to the accompanying drawings of which:
Figure 1 shows a known communications system;
Figure 2 is a flow-chart of a known method of authenticating a message;
Figure 3 is a flow-chart of an exemplary method of authenticating a message;
Figure 4 is a flow-chart of another exemplary method of authenticating a message;
Figure 5 is a flow-chart of another exemplary method of authenticating a message;
Figure 6 shows an authenticatable piece of data in accordance with an embodiment of the present invention;
Figure 7 is a flow-chart of a method of providing an authenticatable piece of data as shown in Figure 6;
Figure 8 is a flow-chart of a method of authenticating an authenticatable piece of data as shown in Figure 6.

A digest function is a known cryptographic function similar to a hash function, in that it takes a large piece of data such as a message and produces a much smaller piece of data (called a "digest"). However, a digest function also requires a key of for example 160 to 256 bits, and is ideally designed so that as this key varies, the digest generated by the digest function for a given piece of data varies markedly and randomly.

While in some ways the intention of a digest function is similar to that of a hash, its specification is quite different to the specification of a hash given above. The digest of a message M using a key k is written digest(k, M). Digest functions are generally required to have the two following properties as k varies uniformly over its range:
1) Given a fixed message M, digest(k, M) is uniformly distributed;
2) For messages M and M' with M not equal to M', the probability that digest(k, M)=digest(k, M') is less than or equal to e for some small number e.

The small number e can be selected for a given application to give the level of security required for that application. In many applications e will represent the tolerable probability that a single check of a supposedly authenticated message is deceived.

As a consequence of these different requirements and the use of a random key, digest functions can be provided that are less computationally expensive to calculate than hash functions while still providing a required level of security. Another consequence is that the digest can be much shorter than a hash, say 32 bits as opposed to 160 or 256 bits. For example, good quality digest functions can be generated by one or two integer multiplications and one word of pseudo random numbers per word of data, the pseudo random numbers being seeded by k.

(The preceding gives a definition of a digest function as preferably satisfying the particular properties given above. However, it will be apparent to the skilled person that many functions of differing types can be considered to be a digest function within the context of the present invention. For example, a function that takes multiple individual pieces of data and multiple keys should also be considered a digest function in the context of the present invention. Similarly, although it is advantageous that a digest function be less computationally expensive than a hash function, the invention equally applies to a digest function that is more computationally expensive than a hash function or is implemented using a standard hash function.)

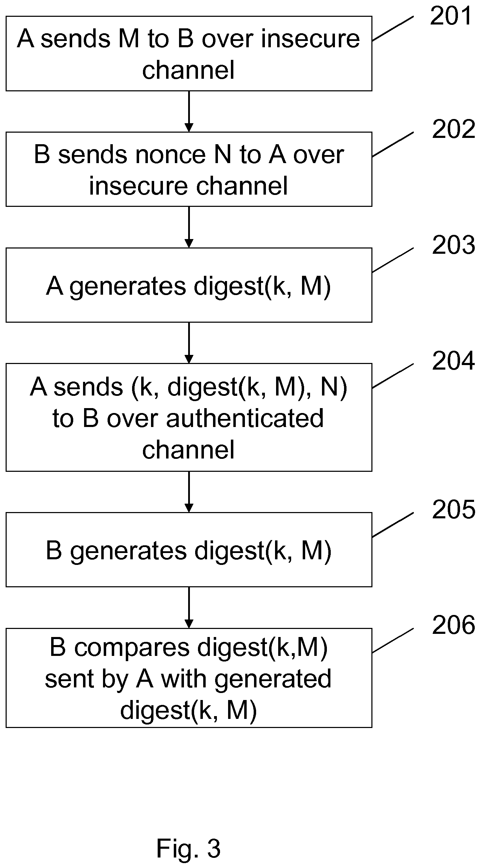

An exemplary method of authenticating a message is shown in Figure 3. A first sends a message M to B over the insecure channel 1 (step 201). Once B has received M, it generates a nonce N (a random number of 160 to 256 bits), and sends it to A (step 202). A generates the digest of the message M using a key k (step 203). The key k is at this stage known only to A, and may for example be generated at random by A at this stage.

A then sends to B over the authentic channel 2 the key k, the digest and the nonce N (step 204). B then uses the key k to generate the digest of the message M (step 205), and compares it with the digest it received from A (step 206). If B's name is also included in step 205 then it can be assured that it was the intended recipient of the message.

If the two digests are the same, then B knows M must have been sent by A. This is because B knows the digest definitely came from A, as B received it over the authentic channel 2. Further, as an attacker could not have known which key would be used to produce the digest of the message M, it would not have been feasible for an attacker to find a second message M' which produced the same digest (as the digest is uniformly distributed for a fixed message as the key varies). This is the case even though the requirements for the digest function are less stringent than those for a hash function. An attacker is not able to exploit the relaxed requirements of the digest function to provide a forged message to B, as to do the required search for a suitable message it requires the key used by A to generate the digest. But the attacker is only able to discover the key used by A once B has already received the message M, and indicated that it has done so by sending the nonce N to A. Further, B is able to confirm that A did indeed send the key only after B had received the message M, as A sends the nonce back to B along with the key over the authentic channel 2.

This method is less computationally expensive than the known method using hash functions, as the generation of the digest is less computationally expensive than the generation of the corresponding hash.

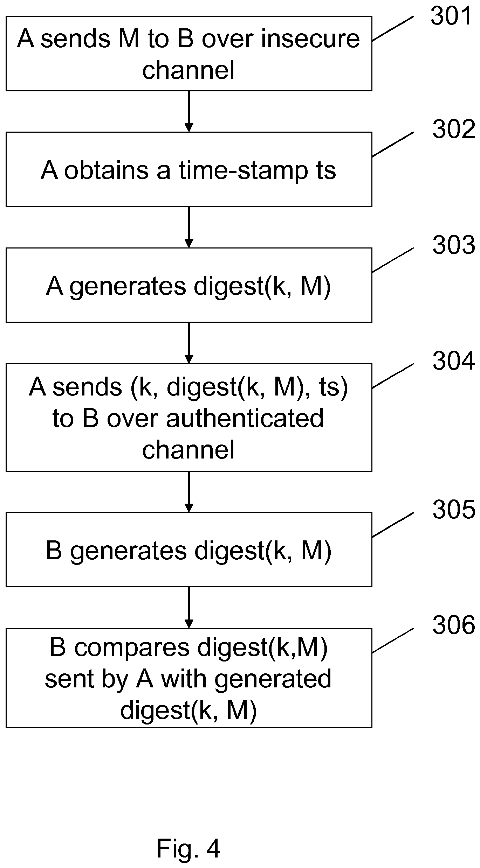

Another exemplary method of authenticating a message is shown in Figure 4. As in the previous example, A first sends a message M to B over the insecure channel 1 (step 301). In this example, A does not receive a nonce from B once B has received the message M, but instead A obtains a time-stamp ts representing a time some chosen interval after it has finished sending the message M to B (step 302).

As in the previous example, A then generates the digest of the message M using a key k (step 303), but A then sends to B over the authentic channel 2 the key k, the digest and the time-stamp ts at a time no earlier than that represented in ts (step 304). B then uses the key k to generate the digest of the message M (step 305), and compares it with the digest it received from A (step 306).

As in the previous example, it is not feasible for an attacker to find a second message M' which produced the same digest, as the attacker is only able to discover the key used by A to generate the digest once B has already received the message M. In the present example, however, B is able to confirm that A did indeed send the key only after it had received the message M, by checking that the time-stamp ts sent by A over the sure channel 2 is later than the time when B finished receiving the message M.

An advantage of this example is that it is suitable for sending a message to multiple recipients at the same time. However, it cannot be used again at different times, as the use of the same key at different times would allow an attacker to do a search for a message M' which produced the same digest under the key k, and to deploy it against later recipients, as the the same second message would falsely "verify" that the message M' was sent by A.

As in the previous example, if A includes the names of one or more intended recipients in step 304, then they can be assured that they were intended recipients.

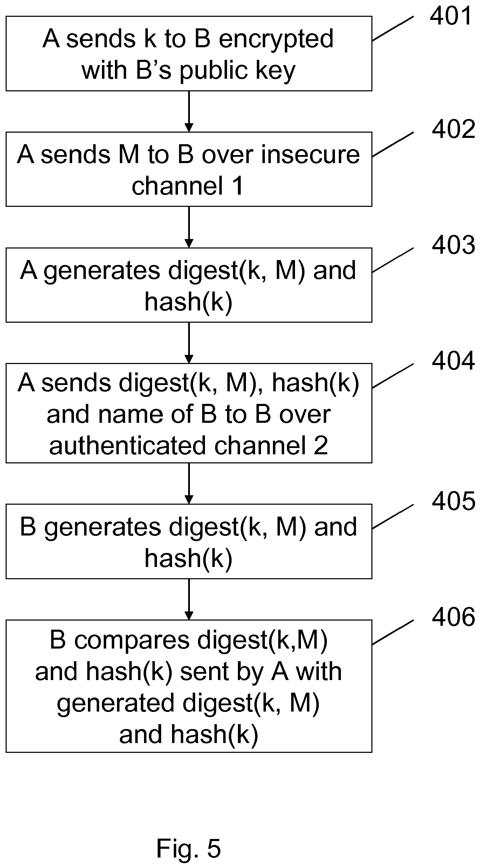

Another exemplary method of authenticating a message is shown in Figure 5. In this example, A first sends the key k to B, encrypted with B's public key (step 401). A then sends a message M to B over the insecure channel 1 (step 402), generates the digest of the message M using a key k, and the hash of that key k (step 403), and sends the digest, the hash and the name of B to B over the authentic channel 2 (step 404). (Alternatively, in step 401 the encrypted key k can be sent over the authenticated channel 2, in which case the hash of the key k is not required in steps 403 and 404.) B then uses the key k to generate the digest of the message M and generates the hash of k (step 405), and compares the generated digest with the digest it received from A and the generated hash with the hash it received from A (step 406).

In this example, it is not feasible for an attacker to find a second message M' which produced the same digest, as the attacker will never know the key used by A to generate the digest once B has already received the message M.

In this example it is necessary that the name of B is included in the authenticated message, for otherwise a third party C could receive a message M from A with key k, search for a second message M' such that digest(k,M)=digest(k,M'), and could then use A's authenticated message from the first run to falsely "authenticate" that A has "sent" M' to B. It is necessary that the value of k is sent or confirmed on the authenticated channel 2 since otherwise an attacker could delay all three messages in this protocol and find a second message M' and key k' such that digest(k',M') = digest(k,M) (this latter value having been read from the third message). This second k' could be encrypted with B's public key to produce an alternate first message, M' could be sent as the second, and the original third message forwarded in compliance with our assumptions that this is on an authenticated channel. Note that the attacker does not need to learn the value of k to perform this attack.

This example is advantageous as it allows both parties to generate the digest simultaneously; in the previous examples B is obliged to wait for A to send the key k along with the digest before B can begin to compute the digest. However, the encryption and decryption of the key is more computationally expensive. Furthermore, a fresh key k needs to be generated for each intended recipient of a message M, and the protocol has to be run independently with each of these recipients.

It will be clear that any other suitable method of allowing A and B to agree a key k in secret will work in place of public key encryption in this example.

In a similar example, the key can be first sent from B to A, encrypted with A's public key; this allows B to select the key to use. In another similar example, which can be used if simultaneous generation of the digests is not required, A can send the key encrypted with B's public key at the same time as sending the digest.

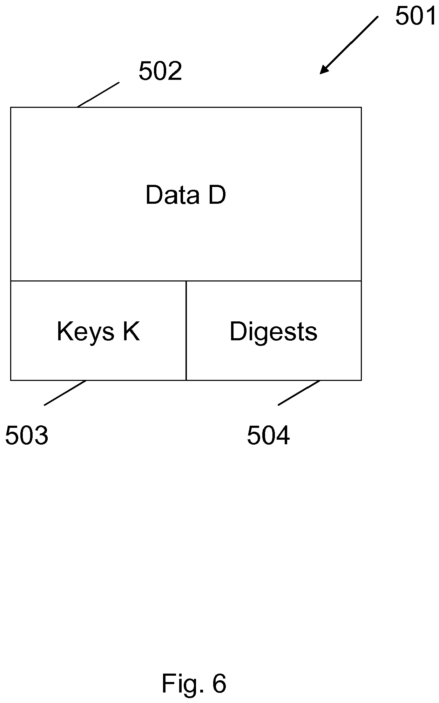

An authenticatable piece of data in accordance with an embodiment of the present invention is shown in Figure 6. The authenticatable piece of data 501 comprises the data 502 itself, along with a multiplicity of keys 503 and a corresponding multiplicity of digests 504.

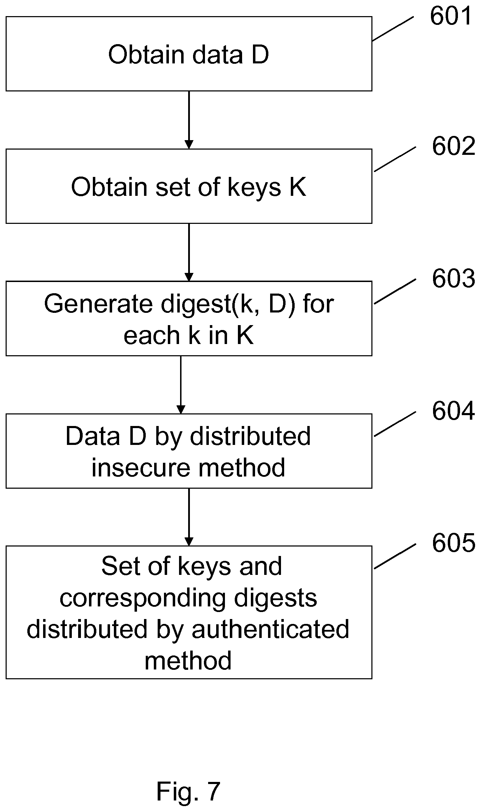

The authenticatable piece of data 501 may be provided by a method as shown in Figure 7. First, the data D itself is obtained (step 601). A set of keys K is then obtained (step 602); it is beneficial, but not essential, to generate these randomly. (One thousand keys, for example, might be generated.) For each key k in the set of keys K, the digest of the data D using the key k is generated, to give a set of digests corresponding to the set of keys K. The data D can then be distributed by an insecure method, for example using an insecure channel 1 (step 604). On the other hand, the set of keys 502 and corresponding digests 503 are distributed by a party A using an authenticatable method such as an authenticated channel 2 (the set of keys and digests 510 may for example be sent as a single cryptographically signed block), so that any party receiving them can authenticate that they originated from A. The authenticatable piece of data 501 is then the combination of the data D, the set of keys K, and the corresponding set of digests.

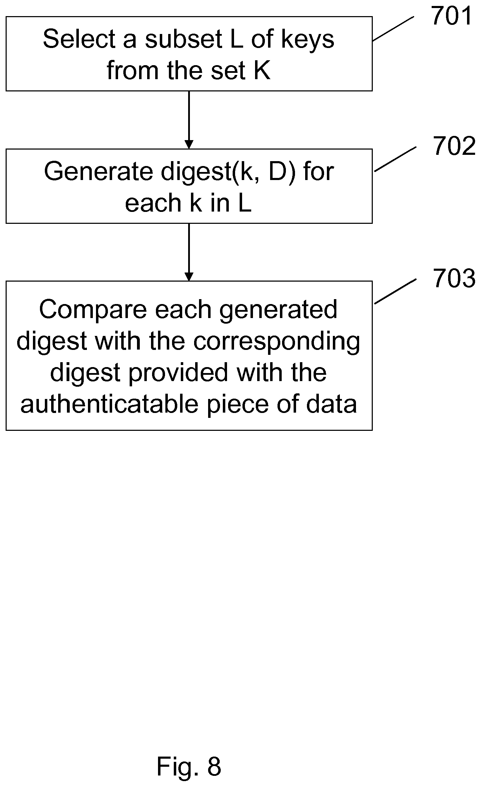

The authenticatable piece of data 501 may be authenticated as coming from a particular party A by a method as shown in Figure 8.

To authenticate the data 501, first a subset L of keys from the set of keys K (which may be a single key from the set K) is selected by the party who wishes to authenticate it (step 701). The subset L should be selected using such a method that no potential attacker can predict what values will be in it, for example at random. The digest of the data D is then generated for each key k in the subset L (step 702). The generated digests are then compared with the corresponding digests provided with the authenticatable piece of data 501 (step 703).

If each generated digest is the same as the corresponding provided digest, then the data can be presumed to be authentic. This is because an attacker cannot know in advance which of the keys from the set K will be used to authenticate the data, and it is presumed impossible for an attacker to find an M' such that digest(k,M')=digest(k,M') for more than one or perhaps two values k from K. Thus the data can be authenticated on multiple occasions even though an attacker can has full knowledge of the keys and their digests.

The generation of the authenticatable piece of data 501 will be computationally expensive, as digests must be generated for the entire set of keys K. On the other hand, the authentication of the data is not as computationally expensive, as digests for only the smaller number of keys in the subset L are required. (Under the assumptions above, authentication would be guaranteed if there were three values in L, but a high degree of authentication would also be provided when only one or two values were in L, especially so if there were a way in which the collective recipients could share information.) This embodiment is therefore particularly suited to applications where the authenticatable piece of data 501 needs to be generated only once, in conditions where computational expense is not an issue, but authenticated on multiple occasions, in conditions where computational expense is a disadvantage. An example of this would be a DVD containing a the data files for a motion picture; the authenticatable data for the DVD itself only needs to produced on one occasion, but the DVD will need to be authenticated each time it is played, in a situation where the computer power required to do the authentication might be a cost issue.)

## Claims

1. An authenticatable piece of data (501), comprising:
the piece of data (502);
a multiplicity of keys (503);
a multiplicity of digests (504), wherein each digest is a digest of the piece of data using a key from the multiplicity of keys;
wherein the multiplicity of keys (503) and multiplicity of digests (504) can be authenticated as originating from a particular party.

2. An authenticatable piece of data (501) as claimed in claim 1, wherein the multiplicity of keys (503) and multiplicity of digests (504) consist of a single cryptographically signed piece of data.

3. A method of providing an authenticatable piece of data (501), comprising the steps of:
obtaining a piece of data (502);
obtaining a multiplicity of keys (503);
generating a digest of the piece of data using each key from the multiplicity of keys (503);
providing the piece of data (502);
providing the multiplicity of keys (503) and multiplicity of digests (504) by an authenticatable method.

4. A method as claimed in claim 3, wherein the multiplicity of keys (503) and multiplicity of digests (504) are provided as a single cryptographically signed piece of data.

5. A method of authenticating an authenticatable piece of data (501) as claimed in claim 1 or 2 or as produced using the method of claim 3 or 4, comprising the steps of:
selecting one or more keys from the multiplicity of keys (503);
generating a digest of the piece of data using each of the one or more selected keys;
comparing each generated digest with the corresponding digest provided with the authenticatable piece of data (501).

6. A data carrier on which is stored an authenticable piece of data (501) as claimed in claim 1 or 2.

7. A computer program product arranged to perform the steps of the methods of any of claims 3 to 5.

## Patentansprüche

1. Authentifizierbare Datenmenge (501), die aufweist:
die Datenmenge (502);
eine Vielzahl von Schlüsseln (503);
eine Vielzahl von Kurzfassungen (504), wobei jede Kurzfassung eine Kurzfassung der Datenmenge unter Verwendung eines Schlüssel aus der Vielzahl der Schlüssel ist;
wobei die Vielzahl der Schlüssel (503) und die Vielzahl der Kurzfassungen (504) authentifiziert werden können, dass sie von einem bestimmten Teilnehmer stammen.

2. Authentifizierbare Datenmenge (501) nach Anspruch 1, wobei die Vielzahl der Schlüssel (503) und Vielzahl der Kurzfassungen (504) aus einer einzigen kryptographisch signierten Datenmenge bestehen.

3. Verfahren zum Bereitstellen einer authentifizierbare Datenmenge (501), das die Schritte aufweist:
Beschaffen einer Datenmenge (502);
Beschaffen einer Vielzahl von Schlüsseln (503);
Erzeugen einer Kurzfassung der Datenmenge unter Verwendung von jedem Schlüssel aus der Vielzahl der Schlüssel (503);
Bereitstellen der Datenmenge (502);
Bereitstellen der Vielzahl der Schlüssel (503) und der Vielzahl der Kurzfassungen (504) durch ein authentifizierbares Verfahren.

4. Verfahren nach Anspruch 3, wobei die Vielzahl der Schlüssel (503) und die Vielzahl der Kurzfassungen (504) als eine einzige kryptographisch signierte Datenmenge bereitgestellt werden.

5. Verfahren zum Authentifizieren einer authentifizierbaren Datenmenge (501) nach Anspruch 1 oder 2 oder mittels des Verfahrens nach Anspruch 3 oder 4 erzeugt, das die Schritte aufweist:
Auswählen von einem oder mehreren Schlüsseln aus der Vielzahl der Schlüssel (503);
Erzeugen einer Kurzfassung der Datenmenge unter Verwendung von jedem des einen oder der mehreren ausgewählten Schlüssel;
Vergleichen jeder erzeugten Kurzfassung mit der entsprechenden Kurzfassung, die mit der authentifizierbaren Datenmenge (501) versehen ist.

6. Datenträger, auf dem eine authentifizierbare Datenmenge (501) nach Anspruch 1 oder 2 gespeichert ist.

7. Computerprogrammprodukt, das eingerichtet ist, die Schritte der Verfahren nach einem der Ansprüche 3 bis 5 auszuführen.

## Revendications

1. Élément de données authentifiable (501), comprenant :
l'élément de données (502) ;
une multiplicité de clés (503) ;
une multiplicité de condensés (504), dans lequel chaque condensé est un condensé de l'élément de données utilisant une clé parmi la multiplicité de clés ;
dans lequel la multiplicité de clés (503) et la multiplicité de condensés (504) peuvent être authentifiées comme provenant d'une partie particulière.

2. Élément de données authentifiable (501) selon la revendication 1, dans lequel la multiplicité de clés (503) et la multiplicité de condensés (504) sont constituées d'un unique élément de données signé de manière cryptographique.

3. Procédé de fourniture d'un élément de données authentifiable (501), comprenant les étapes ci-dessous consistant à :
obtenir un élément de données (502) ;
obtenir une multiplicité de clés (503) ;
générer un condensé de l'élément de données en utilisant chaque clé parmi la multiplicité de clés (503) ;
fournir l'élément de données (502) ;
fournir la multiplicité de clés (503) et la multiplicité de condensés (504) par le biais d'un procédé authentifiable.

4. Procédé selon la revendication 3, dans lequel la multiplicité de clés (503) et la multiplicité de condensés (504) sont fournies sous la forme d'un unique élément de données signé de manière cryptographique.

5. Procédé d'authentification d'un élément de données authentifiable (501) selon la revendication 1 ou 2, ou tel que produit en utilisant le procédé selon la revendication 3 ou 4, comprenant les étapes ci-dessous consistant à :
sélectionner une ou plusieurs clés parmi la multiplicité de clés (503) ;
générer un condensé de l'élément de données en utilisant chacune de ladite une ou desdites plusieurs clés sélectionnées ;
comparer chaque condensé généré au condensé correspondant comportant l'élément de données authentifiable (501).

6. Support de données sur lequel est stocké un élément de données authentifiable (501) selon la revendication 1 ou 2.

7. Produit-programme informatique agencé de manière à mettre en oeuvre les étapes des procédés selon l'une quelconque des revendications 3 à 5.
